# EUROPÄISCHE PATENTSCHRIFT

(11) **EP 4 143 445 B1**
(45) Veröffentlichungstag und Bekanntmachung des Hinweises auf die Patenterteilung: **15.10.2025**
(21) Anmeldenummer: 21745683.9
(22) Anmeldetag: 22.06.2021
(51) Int. Cl.: F16B 5/00, F16B 11/00

(54) **BEFESTIGUNGSSYSTEM**
FASTENING SYSTEM
SYSTÈME DE FIXATION

(30) Priorität: 23.07.2020 DE 102020004438
(43) Veröffentlichungstag der Anmeldung: 08.03.2023
(73) Patentinhaber: Gottlieb Binder GmbH & Co. KG, 71088 Holzgerlingen (DE)
(72) Erfinder: POULAKIS, Konstantinos, 71157 Hildrizhausen (DE); HEEPE, Lars, 72072 Tübingen (DE)
(74) Vertreter: Kohler Schmid Möbus Patentanwälte
(86) Internationale Anmeldenummer: PCT/EP2021/066914
(87) Internationale Veröffentlichungsnummer: WO 2022/017708

(56) Entgegenhaltungen:
- EP-A1- 1 520 690
- DE-A1- 10 012 261
- US-A1- 2007 063 375
- US-A1- 2016 270 217

## Beschreibung

Die Erfindung betrifft ein Befestigungssystem.

Aus dem Stand der Technik sind Befestigungssysteme unterschiedlicher Art und für die unterschiedlichsten Verwendungszwecke bekannt. So gibt es Befestigungssysteme, die sich an Drittbauteilen mittels Klebstoffen, wie beispielsweise Acrylhaftklebern, in wieder lösbarer Weise zyklisch festlegen lassen (EP 0 429 269 B1). Solche Klebstoff-Befestigungssysteme haben den Nachteil, dass ein erneutes Ablösen vom Drittbauteil regelmäßig nicht rückstandsfrei erfolgt und dass nur eine geringe Anzahl von Befestigungszyklen erreichbar ist.

Zur Vermeidung dieser Nachteile wurden in der Vergangenheit bereits weitere Befestigungssysteme (DE 10 2012 013 124 A1) entwickelt zur vollflächig anliegenden, rückstandsfreien und schadlosen Abdeckung von Drittbauteilen, wie Verkehrszeichen, wobei Magnete, an einer Rückseite des Drittbauteils angebracht, einfache Abdeckelemente aus Eisenblech an diesem Drittbauteil anliegend befestigen. Ferner gibt es im Stand der Technik Lösungen, mit denen man unmittelbar in wieder lösbarer Weise Magnetfolien an einem metallischen Drittbauteil anbringt. Die dahingehenden Lösungen haben den Nachteil, dass man insbesondere bei nichtmetallischen Drittbauteilen wie aus Kunststoffmaterial, zum Festlegen einen zusätzlichen Magneten benötigt bzw. mit der Magnetfolie eine Lösung in Händen hält, die sich auf nichtmagnetischen Oberflächen erst gar nicht befestigen lässt.

Des Weiteren gibt es im Stand der Technik Lösungen in Form eines Abdeck-Klebebandsystems (DE 10 2016 108 328 B3), das als Klebeschichtmittel Silikon einsetzt, wobei sich das dahingehend selbstanhaftende System an Drittbauteilen immer dann als nachteilig erweist, wenn die aneinander zu bringenden Oberflächen mit Partikeln verschmutzt sind, eine entsprechend hohe Umgebungsfeuchte vorliegt oder die Oberfläche, auf die das selbsthaftende Befestigungssystem aufzubringen ist, entsprechend eine hohe Rauheit aufweist.

Die vorstehend bekannten Befestigungslösungen wurden bereits dazu eingesetzt, dekorative und informative Kennzeichnungen an Flugzeugen sowie an Kraftfahrzeugen und Schienenfahrzeugen anzubringen (EP 0 429 269 B1) oder um Informationsgehalte von Verkehrsschildern, wie hinfällig gewordene Weghinweise, sichtbar auszukreuzen (DE 10 2012 013 124 A1).

Weitere Befestigungssysteme sind aus der EP 1520 690 A1, der US 2016/0270217 A1, der DE 100 12 261 A1 und der US 2007/0063375 A1 bekannt geworden.

Ausgehend von diesem Stand der Technik liegt der Erfindung die Aufgabe zugrunde, ein Befestigungssystem zu schaffen, das die vorstehend genannten Nachteile vermeiden hilft. Eine dahingehende Aufgabe löst ein Befestigungssystem mit den Merkmalen des Patentanspruchs 1.

Das erfindungsgemäße Befestigungssystem ist dadurch charakterisiert, dass dieses mehrfach - auch in unmittelbarer zeitlicher Abfolge - auf Drittbauteilen mit vorzugsweise glatter Oberfläche zwecks wieder lösbarem Festlegen an denselben applizierbar ist und aus zumindest zwei miteinander verbundenen Funktionsteilen mit flächiger Ausdehnung besteht, von denen zumindest ein Funktionsteil als Folie ausgebildet, informationstragend ist und zumindest ein weiteres Funktionsteil eine Vielzahl von Einzelelementen aufweist, die mit ihren freien Stirnseiten mittels Adhäsion an der Oberfläche des jeweiligen Drittbauteils anhaften, wobei die Einzelelemente jeweils aus Stiel- oder Stängelteilen gebildet sind, die an ihren freien Enden in Form einer Verbreiterung im Durchmesser erweitert sind.

Wie im Stand der Technik aufgezeigt, kann das eine folienartige informationstragende Funktionsteil dekorativ und mit Kennzeichnungen versehen an Flugzeugen, Kraftfahrzeugen und Schienenfahrzeugen angebracht werden bzw. der vorübergehenden Abdeckung zumindest von Teilen von Verkehrszeichen dienen, um deren nicht mehr zutreffenden Informationsgehalte auszukreuzen respektive dergestalt unkenntlich zu machen.

Mit dem zweiten weiteren Funktionsteil mit seiner Vielzahlvon Einzelelementen ist eine Adhäsionsanhaftung des Befestigungssystems an beliebigen Oberflächen des Drittbauteils erreicht, insbesondere haftet aufgrund der Adhäsionswirkung das Befestigungssystem auch auf feuchten, verschmutzten und relativ rauen Oberflächen gut an, wobei die Anhaftung rückstandsfrei erfolgt (auch auf solchen mit nichtmagnetischen Eigenschaften).

In einem bevorzugten Ausführungsbeispiel ist vorgesehen, dass für das Aneinanderhalten der beiden Funktionsteile zwischen diesen ein Verbindungsmittel, insbesondere in Form eines Klebstoffes, eingebracht ist. Vorzugsweise kommt dabei ein Klebstoff zum Einsatz, der artverwandt ist zu zumindest einem der beiden Funktionsteile, beispielsweise ein Silikonklebstoff, sofern das eine Funktionsteil mit der Vielzahl von Einzelelementen aus einem Polyvinylsiloxan-Werkstoff besteht.

In einem weiteren bevorzugten Ausführungsbeispiel ist vorgesehen, dass für einen sandwichartigen Aufbau zwischen den beiden Funktionsteilen ein drittes Funktionsteil angeordnet ist, das als Trägerteil konzipiert zumindest auf einer seiner beiden Seiten, vorzugsweise auf beiden Seiten, die Verbindungsschicht zu zumindest einem der benachbart angeordneten Funktionsteile aufweist. Vorzugsweise ist dabei das dritte Funktionsteil in der Art einer Profilträgerschicht ausgebildet, mit der es möglich ist das Befestigungssystem im Hinblick auf die jeweils benötigte Steifigkeit entsprechend anzupassen, insbesondere lässt sich die Biegesteifigkeit des Befestigungssystems dergestalt erhöhen.

In einem weiteren bevorzugten Ausführungsbeispiel ist vorgesehen, dass alle Funktionsteile einschließlich etwaiger Verbindungsmittel in Schichtform vorliegen und zumindest in einem Ausgangszustand vor Anwendung planparallel und vollflächig sowie überstandsfrei in Anlage miteinander sind. Aufgrund der planparallelen, überstandsfreien Schichtform lassen sich in besonders vorteilhafter Weise die üblichen Folien-Herstellungsprozesse zum Einsatz bringen, um eben kostengünstig ein funktionssicheres Befestigungssystem zu erhalten.

In einem weiteren bevorzugten Ausführungsbeispiel ist vorgesehen, dass zumindest ein Teil der Funktionselemente selbst einen Mehrschichtenaufbau aufweist. Dadurch ist ein jeweiliges, derart ausgebildetes Funktionselement mit Schichten aufbaubar, die voneinander unterschiedliche Funktionen bereitstellen, die zusammen die gewünschte Gesamtfunktion des jeweiligen Funktionselements ergeben.

In einem weiteren bevorzugten Ausführungsbeispiel ist vorgesehen, dass das weitere Funktionsteil als Ganzes mit den Einzelelementen in Gruppen unterteilt ist, die zumindest in einer Längs- und/oder Querrichtung zum Folienverlauf des einen Funktionsteils einen vorgebbaren Abstand voneinander einnehmen, der vorzugsweise eine Spaltgröße hat, die vorzugsweise kleiner ist als die Folienstärke eines jeden der Funktionsteile. Bevorzugt ist dabei vorgesehen, dass ein Gruppenmitglied der Gruppe aus einem einzelnen Teilelement gebildet ist, das mit weiteren Teilelementen das weitere Funktionsteil als Ganzes bildet. Das bevorzugt in einem sogenannten Chill-Roll-Verfahren als Mikroreplikationsverfahren hergestellte weitere Funktionsteil mit der Vielzahl von Einzelelementen kann herstellbedingt nur in einer gewissen maximalen Breite zur Verfügung stehen, von beispielsweise 100 mm, so dass sich dann in Querrichtung zum Folienverlauf mehrere der einen Art von Funktionsteilen in Nebeneinanderanordnung aufbringen lassen. Da die genannten Bänder, die das weitere Funktionsteil ausbilden auch nur eine bestimmte Herstell-Länge aufweisen, entstehen auch Spalte in Längsrichtung zum längsorientierten Folienverlauf des einen Funktionsteils. Die insoweit auf dem einen Funktionsteil in Gruppen aufgebrachten Teilelemente bilden dann mit den weiteren Gruppen von Teilelementen das weitere Funktionsteil als Ganzes aus.

In einem weiteren bevorzugten Ausführungsbeispiel ist vorgesehen, dass die benachbart zueinander angeordneten Funktionsteile klebstofffrei mittels eines Laminier- oder Kaschierverfahrens miteinander verbunden sind.

So verfügen die aus Kunststoffmaterialien bestehenden einzelnen Funktionsteile bedingt durch ihren Herstellprozess noch über eine gewisse Restwärme und sind insoweit noch nicht vollständig ausvernetzt. Es lässt sich dann über ein übliches Walzengestühl ein derart hoher Anpressdruck einstellen, dass die folienartigen Funktionsteile miteinander intrinsisch und dergestalt ein Produkt bildend miteinander verbunden werden. Es besteht aber auch die Möglichkeit quasi in-situ erneut unter Einsatz der Reaktionswärme zur Verbindung der Folien miteinander zwischen diese eine folienartige Acrylat-Klebstoffschicht einzubringen, was zu einer verbesserten, langandauernden Klebstoffverbindung zwischen den Funktionsteilen führt.

In einem weiteren bevorzugten Ausführungsbeispiel ist vorgesehen, dass das jeweilige Funktionsteil aus einem Kunststoffmaterial, wie Polyethylenmaterial, besteht und dass das weitere Funktionsteil zumindest im Umfang seiner Einzelelemente mit Adhäsionseigenschaft aus einem Polyvinylsiloxanmaterial gebildet ist. Insgesamt ist es jedoch möglich hier Materialien aus der Klasse der Poly(or-gano)siloxane zu verwenden. Vorzugsweise ist das gesamte weitere Funktionsteil mit seinen Einzelelementen aus einem Polyvinylsiloxanmaterial gebildet, dessen Adhäsionseigenschaft zu einer verbesserten Anhaftung des Befestigungssystems an Drittbauteilen führt, mit insbesondere erhöhten Haft-, Schäl- und Scherfestigkeitswerten.

In einem weiteren bevorzugten Ausführungsbeispiel ist vorgesehen, dass das eine Funktionsteil als informationstragend farbig, mit Symbolen bedruckt, reflektierend, fluoreszierend, leuchtend, matt, glänzend oder mit KI versehen ausgebildet ist. Dadurch sind mittels des einen Funktionsteils Informationen unter Einbezug von Warnhinweisen an das Befestigungssystem betrachtende Personen übermittelbar. Sofern in diesem Zusammenhang von KI (Künstlicher Intelligenz) die Rede ist, meint dies intelligente Systeme wie Transponder, Rechnerchips, Digitalanzeigen etc..

In einem weiteren bevorzugten Ausführungsbeispiel ist vorgesehen, dass zumindest eines der Funktionsteile mit Zusatzfunktionen ausgestattet ist, wie flammhemmend, recyclebar, biologisch abbaubar, veraschbar, magnetisierbar oder magnetische Eigenschaften aufweisend, resistent gegen elektrostatische Aufladung oder elektromagnetisch verträglich (EMV) sowie abriebfest. Dadurch ist die Grundfunktion des jeweiligen Funktionsteils modular erweiterbar.

In einem weiteren bevorzugten Ausführungsbeispiel ist vorgesehen, dass das weitere Funktionsteil mit den adhäsionsfähigen Einzelelementen unter Einsatz eines Formsiebes im Chill-Roll-Verfahren herstellbar ist. Dadurch lässt sich in großtechnischem Maßstab das weitere Funktionsteil mit den adhäsionsfähigen Einzelelementen mittels eines Mikroreplikationsverfahrens herstellen und das derartig hergestellte Extrusionsprodukt lässt sich mit den sonstigen Funktionsteilen des Befestigungssystems in Folienbauweise im Rahmen von Laminier- oder Kaschierverfahren fortlaufend herstellen, wobei sich der dahingehende Prozess weitgehend automatisieren lässt.

In einem weiteren bevorzugten Ausführungsbeispiel ist vorgesehen, dass es als Roll- oder Wickelmaterial ausgebildet im abgerollten bzw. abgewickelten Zustand und in vorgebbaren Längen abgeteilt dem jeweiligen Verwendungszweck zuführbar ist. Dadurch ist das Befestigungssystem besonders raumsparend transportier- und lagerbar.

Gegenstand der Erfindung ist auch eine handelbare Wareneinheit bestehend aus mehreren derartigen Befestigungssystemen, die auf einem Trägerband zusammengefasst als voneinander vereinzelbare Kleinteile vom Trägerband abgelöst in der Anwendung für eine lösbare Verbindung mit dem Drittbauteil vorgesehen sind. Insbesondere im Rahmen von Baustellenanwendungen lassen sich die dergestalt nach unterschiedlich konfektionierten Befestigungssysteme vor Ort zur Verfügung stellen.

Ebenfalls Gegenstand der Erfindung ist die Verwendung eines dahingehenden Befestigungssystems, das dem Unwirksammachen von Informationsgehalten von Verkehrsschildern jeglicher Art dient und/oder als Warnhinweis zum Kenntlichmachen von Fahrzeugen, wie Baufahrzeugen, dient und das durch Ablösen des Befestigungssystems von solchen Drittbauteilen das Unwirksam- bzw. Kenntlichmachen rückstandsfrei aufgehoben ist. Dadurch ist das Befestigungssystem mit einer hohen Wiederholbarkeit auf verschmutzten, rauen, feuchten und/oder nicht-magnetischen Verkehrszeichen bzw. Fahrzeugen ohne ein Hinterlassen von Rückständen auf diesem jeweiligen Drittbauteil haftend anbringbar.

Im Folgenden wird ein erfindungsgemäßes Befestigungssystem anhand der Zeichnung näher erläutert. Dabei zeigen in prinzipieller und nicht maßgeblicher Darstellung die
- Fig. 1: in perspektivischer Draufsicht einen Teil des Befestigungssystems mit nach oben vorstehenden Einzelelementen als Teil einer Adhäsionsfolie, die das weitere anhaftende Funktionsteil bildet, das auf der darunterliegenden Folie angeordnet ist, die das eine informationstragende Funktionsteil bildet;
- Fig. 2: in einer Seitenansicht ein erfindungsgemäßes Befestigungssystem, bestehend aus dem einen Funktionsteil und dem weiteren Funktionsteil gemäß der Darstellung nach der Fig. 1;
- Fig. 3: in einer Seitenansicht das Befestigungssystem aus Fig. 2, wobei zwischen den beiden Funktionsteilen ein Verbindungsmittel vorgesehen ist;
- Fig. 4: in einer Seitenansicht das Befestigungssystem aus Fig. 3, wobei zwischen dem einen Funktionsteil und dem weiteren Funktionsteil ein drittes Funktionsteil in Form eines Trägerteils vorgesehen ist, zwischen dem und dem einen Funktionsteil ein Verbindungsmittel eingebracht ist;
- Fig. 5: in einer Seitenansicht das Befestigungssystem aus Fig. 4, wobei zwischen dem einen Funktionsteil und dem Trägerteil sowie zwischen dem Trägerteil und dem weiteren Funktionsteil jeweils ein Verbindungmittel vorgesehen ist;
- Fig. 6: in einer Seitenansicht das Befestigungssystem aus Fig. 2, wobei das weitere Funktionsteil in jeweils einer Gruppe zugehörige Teilelemente unterteilt dargestellt ist;
- Fig. 7: in einer Seitenansicht das Befestigungssystem aus Fig. 3, wobei das weitere Funktionsteil entsprechend Fig. 6 in Teilelemente unterteilt dargestellt ist;
- Fig. 8: in einer Seitenansicht das Befestigungssystem aus Fig. 7, wobei zusätzlich zu dem weiteren Funktionsteil das Verbindungsmittel entsprechend der Teilelemente des weiteren Funktionsteils unterteilt ist; und
- Fig. 9: in einer perspektivischen Schrägansicht eine handelbare Wareneinheit mit mehreren erfindungsgemäßen Befestigungssystemen aus Fig. 1 bis 8.

Die Figuren zeigen ein Befestigungssystem zum mehrfachen, wiederlösbaren Anbringen auf Drittbauteilen mit vorzugsweise glatter Oberfläche (nicht dargestellt). Das Befestigungssystem weist mindestens zwei miteinander verbundene Funktionsteile 2, 6 mit flächiger Ausdehnung auf, nämlich zumindest ein als Folie ausgebildetes, informationstragendes erstes Funktionsteil 2 und zumindest ein eine Vielzahl von Einzelelementen 4 aufweisendes zweites, weiteres Funktionsteil 6. Die Einzelelemente 4 haften mit ihren freien Stirnseiten 8 mittels Adhäsion an der Oberfläche des jeweiligen Drittbauteils, beispielsweise der Oberfläche eines Verkehrsschildes oder eines Kraftfahrzeuges, an.

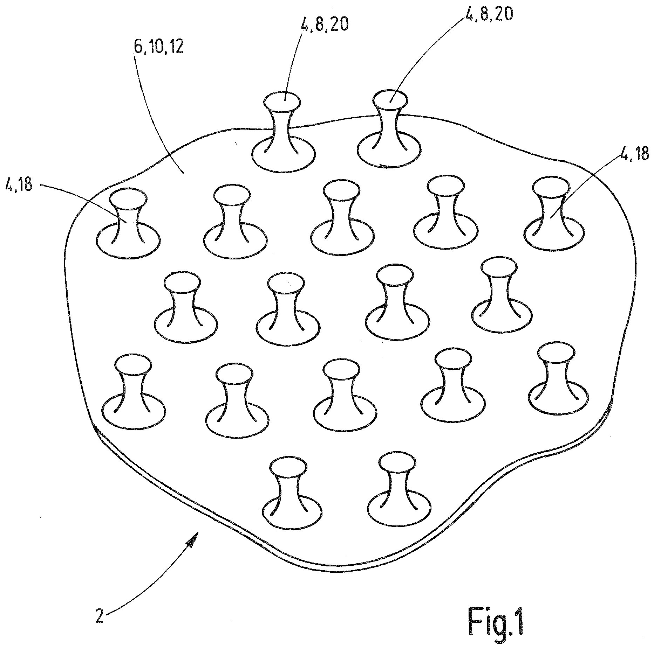

Fig. 1 zeigt die von einer ersten freien und ebenen Seitenfläche 10 eines Basisteils 12 des weiteren Funktionsteils 6 sich im Wesentlichen in einem rechten Winkel wegerstreckenden Einzelelemente 4. An seiner der ersten Seitenfläche 10 gegenüberliegenden zweiten ebenen Seitenfläche 14 ist das weitere Funktionsteil 6 mit einer ersten ebenen Seitenfläche 16 des einen Funktionsteils 2 fest verbunden.

Die Einzelelemente 4 sind jeweils aus Stiel- oder Stängelteilen 18 gebildet, die an ihren freien Enden 8 in Form einer Verbreiterung 20 im Durchmesser erweitert sind. Die Einzelelemente 4 sind des Weiteren derart eingerichtet, dass eine Anhaftung der Verbreiterungen 20 an einem Drittbauteil überwiegend mittels Van-der-Waals-Kräften realisiert ist.

Das derart ausgebildete weitere Funktionsteil 6 lässt sich im großindustriellen Maßstab sehr kostengünstig herstellen und mit der Oberfläche eines beliebigen Drittbauteils mehrfach wiederlösbar verbinden, indem die Einzelelemente 4 mit ihren Verbreiterungen 20 unmittelbar mit der Oberfläche des Drittbauteils über die Van-der-Waals-Kräfte wechselwirken.

Weil die Van-der-Waals-Kräfte nur über eine kurze Distanz wirken, entsprechen sich sämtliche Einzelelemente 4 vorzugsweise in ihrer Länge respektive Höhe, so dass die freien Enden 8 der Einzelelemente 4 in einer Ebene angeordnet sind. Zum Vermeiden eines Wegknickens der Einzelelemente 4 von der zu kontaktierenden Oberfläche des Drittbauteils, weisen die Einzelelemente 4 eine hinreichende Eigensteifigkeit auf. Zum Sicherstellen eines hinreichend guten Ablöseverhaltens können die Verbreiterungen 20 der Einzelelemente 4 jeweils über eine entsprechende Durchmesserreduzierung im Übergangsbereich zum Stängelteil 18 mit dem Stängelteil 18 verbunden sein, so dass an der Übergangsstelle eine Art Gelenk gebildet ist. Dadurch kann beim Wiederlösen des Befestigungssystems von einem Drittbauteil das Basisteil 12 des weiteren Funktionsteils 6 zusammen mit den Stängelteilen18 bereits abgeschält werden und die zeitgleich noch anhaftende Verbreiterung 20 der Einzelelemente 4 der Abschälbewegung im Sinne einer Abrollbewegung über das jeweilige Gelenk nachfolgen. Sehr gute Verhaftungsresultate haben sich ergeben, wenn etwa 16.000 Einzelelemente 4 und mehr pro Quadratzentimeter Material des Basisteils 12 vorhanden sind, wobei die Einzelelemente 4 dabei eine Länge von etwa 100 µm oder weniger aufweisen in Kombination mit einem Durchmesser der kopfseitigen Verbreiterung 20 in der Breite von etwa 60 µm oder weniger.

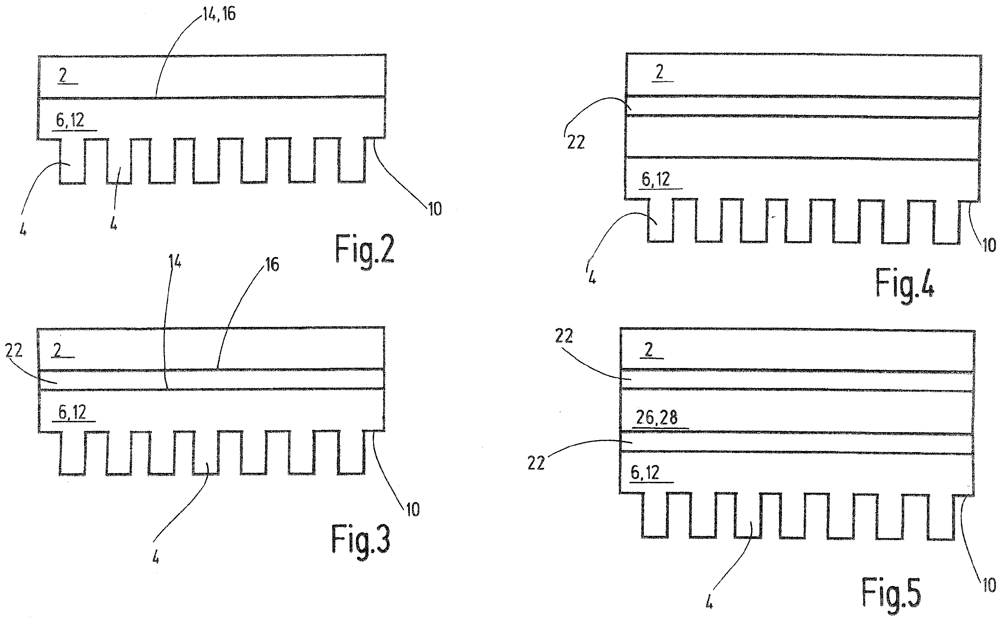

Fig. 2 zeigt die verbindungsmittelfrei fest miteinander verbundene Kombination des einzigen einen Funktionsteils 2 und des einzigen weiteren Funktionsteils 6 in einer schematischen Prinzipdarstellung.

Zwischen zwei benachbarten Funktionsteilen 2, 6 kann ein Verbindungsmittel 22 eingebracht sein für ein festes Aneinanderhalten bzw. ein festes Verbinden der beiden Funktionsteile 2, 6 miteinander. So ist in Fig. 3 zwischen der ersten Seitenfläche 16 des einzigen einen Funktionsteils 2 und der zweiten Seitenfläche 14 des einzigen weiteren Funktionsteils 6 eine derartige Verbindungsschicht 22 eingebracht, insbesondere in Form eines hierfür geeigneten Klebstoffes.

In Fig. 4 ist in der Art eines sandwichartigen Aufbaus zwischen diesen beiden Funktionsteilen 2, 6 ein drittes Funktionsteil 26 in Form eines Trägerteils 28 angeordnet, das mit dem weiteren Funktionsteil 6 verbindungsmittelfrei fest verbunden ist. Zudem ist zwischen dem Trägerteil 28 und dem einen Funktionsteil 2 ein Verbindungsmittel 22 vorgesehen. In Fig. 5 ist genauso wie in Fig. 4 zwischen dem als Trägerteil 28 ausgebildeten dritten Funktionsteil 26 und dem einen Funktionsteil 2 sowie zusätzlich zwischen dem Trägerteil 28 und dem weiteren Funktionsteil 6 jeweils ein Verbindungsmittel 22 vorgesehen. Das Trägerteil 28 kann als Profilträgerschicht bezeichnet werden. Das jeweilige Verbindungsmittel 22 kann aus einer Klebstoffschicht gebildet sein, beispielsweise unter Einsatz eines Acrylatklebstoffes.

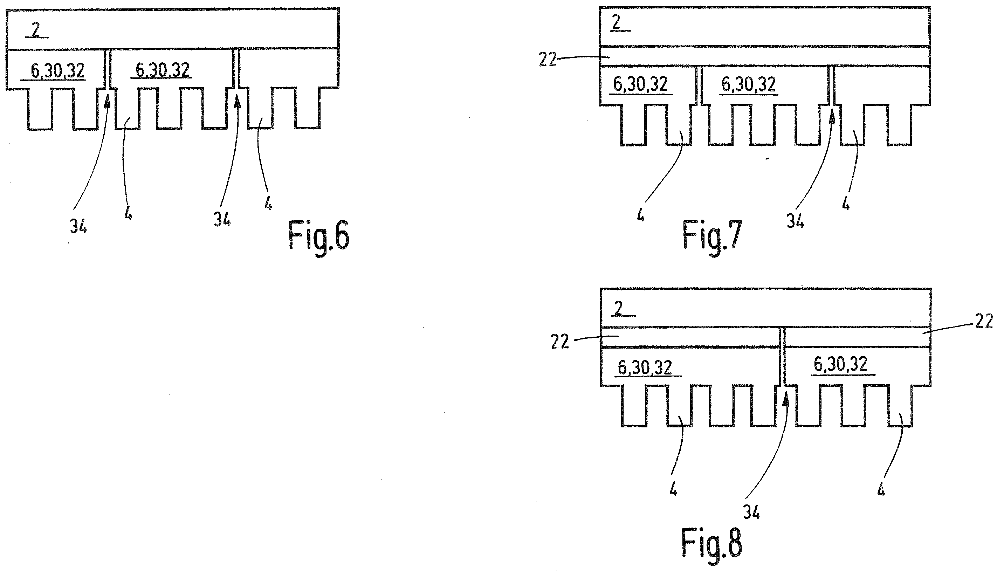

Fig. 6 zeigt die Kombination des einzigen einen Funktionsteils 2 und des einzigen weiteren Funktionsteils 6. Das weitere Funktionsteil 6 ist einschließlich seiner Einzelelemente 4 als Ganzes zumindest in Längsrichtung des Befestigungssystems in Gruppen 30 unterteilt. Jede Gruppe 30 weist zumindest ein einzelnes Teilelement 32 auf, das jeweils zumindest in Längsrichtung des Befestigungssystems einen vorgebbaren Abstand 34 zu dem benachbarten Teilelement 32 einer weiteren Gruppe 30 aufweist, der kleiner ausgebildet ist als die Folienstärke eines jeden der Funktionsteile 2, 6. Das Befestigungssystem aus Fig. 7 unterscheidet sich von dem Befestigungssystem aus Fig. 6 lediglich dahingehend, dass zwischen den beiden Funktionsteilen 2, 6 eine durchgehende Schicht des Verbindungsmittels 22 vorgesehen ist, wohingegen in Fig. 8 zusätzlich zu dem weiteren Funktionsteil 6 das Verbindungs- oder Klebstoffmittel entsprechend der Teilelemente 32 des weiteren Funktionsteils 6 unter Ausbildung des vorgebbaren Abstands 34 unterteilt ist.

Sämtliche Funktionsteile 2, 6, 26, 28 und Verbindungsmittel 22 sind in Schichtform ausgebildet, wobei jedes Funktionsteil 2, 6, 26, 28 einen in den Figuren nicht dargestellten Mehrschichtenaufbau aufweisen kann. Sämtliche Schichten des Befestigungssystems sind zumindest in einem Ausgangszustand vor dem erstmaligen Anbringen des Befestigungssystems planparallel, vollflächig und überstandsfrei in Anlage miteinander.

Das weitere Funktionsteil 6 ist zumindest im Umfang seiner Einzelelemente 4 mit Adhäsionseigenschaft aus einem Polyvinylsiloxanmaterial gebildet.

Das eine Funktionsteil 2 ist zumindest teilweise aus einem Kunststoffmaterial, wie beispielsweise Polyethylenmaterial, gefertigt und kann als informationstragend farbig, mit Symbolen einschließlich Text bedruckt, reflektierend, fluoreszierend, leuchtend und/oder matt oder glänzend ausgestaltet sein. Auch ist es denkbar, dass eine Mensch-Maschine-Schnittstelle, eine Anzeige, beispielsweise Digitalanzeige, ein Sensor, eine Daten- und/oder eine Transponderschnittstelle, in das eine Funktionsteil 2 integriert sind, die jeweils zur Datenverarbeitung mit einer Recheneinheit verbunden sind, auf der selbstlernende Algorithmen im Sinne von maschinellem Lernen implementiert sein können. Ein derart ausgebildetes Funktionsteil 2, 6, 26, 28 wird vorliegend als mit künstlicher Intelligenz versehen bezeichnet.

Jedes Funktionsteil 2, 6, 26, 28 kann zumindest eine zusätzliche Eigenschaft aufweisen; es kann beispielsweise flammhemmend, recyclebar, biologisch abbaubar, veraschbar, magnetisierbar oder magnetisch, resistent gegen elektrostatische Aufladung oder elektromagnetisch verträglich und/oder abriebfest ausgebildet sein.

Ein derart ausgebildetes Befestigungssystem kann zum Unwirksammachen von Informationsgehalten von Verkehrsschildern jeglicher Art und/oder als Warnhinweis zum Kenntlichmachen von Fahrzeugen, wie Baufahrzeugen dienen, wobei nach Ablösen des Befestigungssystems von diesen Drittbauteilen das Unwirksam- bzw. Kenntlichmachen rückstandsfrei aufgehoben ist. Dadurch ist das Befestigungssystem mit einer hohen Wiederholbarkeit auch auf verschmutzten, rauen, feuchten und/oder nicht-magnetischen Drittbauteilen in Form von Verkehrszeichen bzw. Fahrzeugen ohne ein Hinterlassen von Rückständen auf dem jeweiligen Drittbauteil haftend anbringbar.

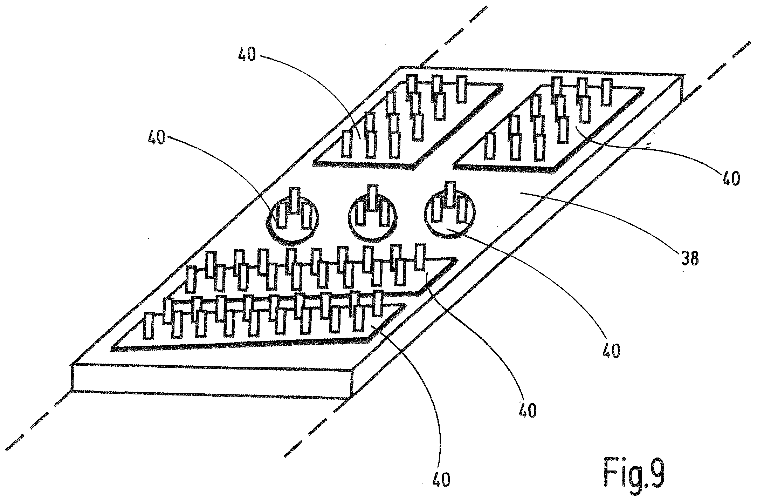

Fig. 9 zeigt ein Trägerband 38, auf dem mehrere Befestigungssysteme als voneinander vereinzelbare Kleinteile 40, sogenannte Patches 40, mittels eines handelsüblichen Klebstoffs lösbar angeordnet sind, die vom Trägerband 38 abgelöst mehrfach wiederlösbar an einem Drittbauteil festlegbar sind. Auch denkbar ist, dass das Befestigungssystem zu Transportzwecken oder zur Lagerung als Roll- oder Wickelmaterial ausgebildet ist, das im abgerollten bzw. abgewickelten Zustand und in vorgebbaren Längen, beispielsweise mittels Schneiden abgeteilt an Drittbauteilen mehrfach wiederlösbar anbringbar ist.

Im Folgenden wird das Herstellungsverfahren eines derartigen Befestigungssystems näher erläutert:
Zunächst ist das weitere Funktionsteil 6 mittels eines in den Figuren nicht dargestellten sogenannten Chill-Roll-Verfahrens hergestellt. Bei diesem Verfahren wird ein Kunststoff einer als Förderspalt ausgebildeten Formgebungszone zugeführt, die zwischen einem Druckwerkzeug in Form einer Druckwalze und einem Formwerkzeug in Form einer Formwalze gebildet ist. Das Formwerkzeug weist an seinem Umfang ein Formsieb auf, in das über seinen Außenumfang regelmäßig verteilte Formhohlräume eingebracht sind. Die Formhohlräume weisen, im Längsschnitt (senkrecht zur Drehachse der jeweiligen Walze) gesehen, zwei gegenüberliegende Begrenzungswände auf, vorzugsweise jeweils mit durchgehend konvexem Bahnverlauf. Der Abstand der Begrenzungswände erweitert sich ausgehend von dem Außenumfang des Formsiebes in Richtung der Drehachse des Formwerkzeuges. Wenn die beiden Walzen in entgegengesetzte Drehrichtungen angetrieben werden, fördern diese den Kunststoff durch den Förderspalt, wobei dabei das Basisteil 12 respektive Trägerteil des weiteren Funktionsteils 6 geformt wird und an der der Formwalze anliegenden Seite des Basisteils 12 mittels der formgebenden Formhohlräume der Formwalze die Einzelelemente 4 ausgebildet werden.

Darauffolgend wird das weitere anhaftende Funktionsteil 6 entsprechend der jeweiligen Fig. 1 bis 8, gegebenenfalls in Schichtbauweise unter Zwischenanordnung des Trägerteils 28 und/oder des Verbindungsmittels 22 oder verbindungsmittelfrei, mittels eines Laminier- oder Kaschierverfahrens, fest mit dem einen informationstragenden Funktionsteil 2 verbunden, wodurch das jeweilige in Fig. 1 bis 8 gezeigte Befestigungssystem gebildet wird.

## Patentansprüche

1. Befestigungssystem, das mehrfach auf Drittbauteilen, mit vorzugsweise glatter Oberfläche, zwecks wiederlösbarem Festlegen an denselben applizierbar ist, bestehend aus zumindest zwei miteinander verbundenen Funktionsteilen (2, 6) mit flächiger Ausdehnung, von denen zumindest ein Funktionsteil (2) als Folie ausgebildet informationstragend ist und zumindest ein weiteres Funktionsteil (6) eine Vielzahl von Einzelelementen (4) aufweist, die mit ihren freien Stirnseiten (8) mittels Adhäsion an der Oberfläche des jeweiligen Drittbauteils anhaften, wobei die Einzelelemente (4) jeweils aus Stiel- oder Stängelteilen (18) gebildet sind, die an ihren freien Enden (8) in Form einer Verbreiterung (20) im Durchmesser erweitert sind.

2. Befestigungssystem nach Anspruch 1, **dadurch gekennzeichnet, dass** für das Aneinanderhalten der beiden Funktionsteile (2, 6) zwischen diesen ein Verbindungsmittel (22), insbesondere in Form eines Klebstoffes, eingebracht ist.

3. Befestigungssystem nach Anspruch 1 oder 2, **dadurch gekennzeichnet, dass** für einen sandwichartigen Aufbau zwischen den beiden Funktionsteilen (2, 6) ein drittes Funktionsteil (26) angeordnet ist, das als Trägerteil (28) konzipiert zumindest auf einer seiner beiden Seiten, vorzugsweise auf beiden Seiten, das Verbindungsmittel (22) zu zumindest einem der benachbart angeordneten Funktionsteile (2, 6) aufweist.

4. Befestigungssystem nach einem der vorstehenden Ansprüche, **dadurch gekennzeichnet, dass** alle Funktionsteile (2, 6, 26, 28) einschließlich etwaiger Verbindungsmittel (22) in Schichtform vorliegen und zumindest in einem Ausgangszustand vor Anwendung planparallel und vollflächig sowie überstandsfrei in Anlage miteinander sind.

5. Befestigungssystem nach einem der vorstehenden Ansprüche, **dadurch gekennzeichnet, dass** zumindest ein Teil der Funktionsteile (2, 6, 26, 28) selbst einen Mehrschichtenaufbau aufweist.

6. Befestigungssystem nach einem der vorstehenden Ansprüche, **dadurch gekennzeichnet, dass** das weitere Funktionsteil (6) als Ganzes mit den Einzelelementen (4) in Gruppen (30) unterteilt ist, die zumindest in einer Längs- und/oder Querrichtung zum Folienverlauf des einen Funktionsteils (2) einen vorgebbaren Abstand (34) voneinander einnehmen, der vorzugsweise eine Spaltgröße hat, die kleiner ist als die Folienstärke eines jeden der Funktionsteile (2, 6, 26, 28).

7. Befestigungssystem nach einem der vorstehenden Ansprüche, **dadurch gekennzeichnet, dass** ein Gruppenmitglied (30) der Gruppen (30) aus einem einzelnen Teilelement (32) gebildet ist, das mit weiteren Teilelementen (32) das weitere Funktionsteil (6) bildet.

8. Befestigungssystem nach einem der vorstehenden Ansprüche, **dadurch gekennzeichnet, dass** die benachbart zueinander angeordneten Funktionsteile (2, 6, 26, 28) klebstofffrei mittels eines Laminier- oder Kaschierverfahrens miteinander verbunden sind.

9. Befestigungssystem nach einem der vorstehenden Ansprüche, **dadurch gekennzeichnet, dass** das jeweilige Funktionsteil (2, 6, 26, 28) aus einem Kunststoffmaterial, wie Polyethylenmaterial, besteht und dass das weitere Funktionsteil (6) zumindest im Umfang seiner Einzelelemente (4) mit Adhäsionseigenschaft aus der Klasse der Poly(organo)siloxane, vorzugsweise aus einem Polyvinylsiloxanmaterial gebildet ist.

10. Befestigungssystem nach einem der vorstehenden Ansprüche, **dadurch gekennzeichnet, dass** das eine Funktionsteil (2) als informationstragend
- farbig
- mit Symbolen, vorzugsweise mit Text bedruckt
- reflektierend
- fluoreszierend
- leuchtend
- matt oder glänzend
- mit KI versehen
ausgebildet ist.

11. Befestigungssystem nach einem der vorstehenden Ansprüche, **dadurch gekennzeichnet, dass** zumindest eines der Funktionsteile (2, 6, 26, 28) mit Zusatzfunktionen ausgestattet ist, wie
- flammhemmend
- recyclebar
- biologisch abbaubar
- veraschbar
- magnetisierbar oder magnetische Eigenschaften aufweisend
- resistent gegen elektrostatische Aufladung oder elektro-magnetisch verträglich (EMV)
- abriebfest.

12. Befestigungssystem nach einem der vorstehenden Ansprüche, **dadurch gekennzeichnet, dass** das weitere Funktionsteil mit den adhäsionsfähigen Einzelelementen unter Einsatz eines Formsiebes im Chill-Roll-Verfahren herstellbar ist.

13. Befestigungssystem nach einem der vorstehenden Ansprüche, **dadurch gekennzeichnet, dass** es als Roll- oder Wickelmaterial ausgebildet im abgerollten bzw. abgewickelten Zustand und in vorgebbaren Längen abgeteilt dem jeweiligen Verwendungszweck zuführbar ist.

14. Handelbare Wareneinheit bestehend aus mehreren Befestigungssystemen nach einem der vorstehenden Ansprüche, die auf einem Trägerband (38) zusammengefasst als voneinander vereinzelbare Kleinteile (40) vom Trägerband (38) abgelöst in der Anwendung für eine lösbare Verbindung mit dem Drittbauteil vorgesehen sind.

15. Verwendung eines Befestigungssystems nach einem der Ansprüche 1 bis 13, **dadurch gekennzeichnet, dass** es dem Unwirksammachen von Informationsgehalten von Verkehrsschildern jeglicher Art und/oder als Warnhinweis zum Kenntlichmachen von Fahrzeugen, wie Baufahrzeugen, dient und dass durch Ablösen des Befestigungssystems von solchen Drittbauteilen das Unwirksam- bzw. Kenntlichmachen rückstandsfrei aufgehoben ist.

## Claims

1. A fastening system which can be applied repeatedly to third components, preferably having a smooth surface, for the purpose of detachable fastening to the same, consisting of at least two interconnected functional parts (2, 6) of planar shape, of which at least one functional part (2) has the form of a film and bears information and at least one further functional part (6) has a plurality of individual elements (4), the free end faces (8) of which adhere to the surface of the respective third component by means of adhesion, wherein the individual elements (4) are each formed of stem parts or stalk parts (18), the diameters of which are increased at their free ends (8) in the form of a widening (20).

2. The fastening system according to claim 1, **characterized in that** a connecting means (22), in particular in the form of a glue, is introduced between the two functional parts (2, 6) for keeping them together.

3. The fastening system according to claim 1 or 2, **characterized in that** for a sandwich-like structure between the two functional parts (2, 6) a third functional part (26) is arranged, which, designed as a support part (28), has the connecting means (22) to at least one of the adjacent functional parts (2, 6) on at least one of its two sides, preferably on both sides.

4. The fastening system according to any one of the preceding claims, **characterized in that** all functional parts (2, 6, 26, 28), including any connecting means (22), are provided as layers and, at least in an initial state prior to use, are in contact with one another in a plane-parallel and full-contact manner and without any protrusions.

5. The fastening system according to any one of the preceding claims, **characterized in that** at least some of the functional parts (2, 6, 26, 28) themselves have a multilayer structure.

6. The fastening system according to any one of the preceding claims, **characterized in that** the further functional part (6) as a whole together with the individual elements (4) is subdivided into groups (30), which, at least in a longitudinal and/or transverse direction to the extension of the film of the one functional part (2), have a predeterminable distance (34) from one another, which preferably has a gap size that is smaller than the film thickness of each of the functional parts (2, 6, 26, 28).

7. The fastening system according to any one of the preceding claims, **characterized in that** a group member (30) of the groups (30) is formed of a single segment (32) which, in conjunction with further segments (32), forms the further functional part (6).

8. The fastening system according to any one of the preceding claims, **characterized in that** the functional parts (2, 6, 26, 28) arranged adjacent to one another, are connected to each other without glue by means of a coating or lamination process.

9. The fastening system according to any one of the preceding claims, **characterized in that** the respective functional part (2, 6, 26, 28) consists of a plastic material, such as polyethylene material, and **in that** the further functional part (6), at least to the extent of its individual elements (4), has adhesion properties of the class of poly(organo)siloxanes, preferably of a polyvinylsiloxane material.

10. The fastening system according to any one of the preceding claims, **characterized in that** the one functional part (2) is designed bearing information and
- colored
- with symbols, preferably with text printed thereon
- reflective
- fluorescent
- luminous
- matte or glossy
- provided with AI.

11. The fastening system according to any one of the preceding claims, **characterized in that** at least one of the functional parts (2, 6, 26, 28) is equipped with additional functions, such as being
- flame retardant
- recyclable
- biodegradable
- incinerable
- magnetizable or exhibiting magnetic properties
- resistant to electrostatic charge or electro-magnetically compatible (EMC)
- abrasion resistant.

12. The fastening system according to any one of the preceding claims, **characterized in that** the further functional part having the individual elements, capable of adhesion, can be produced using a forming screen in a chill-roll process.

13. The fastening system according to any one of the preceding claims, **characterized in that** the fastening system, designed as rolled or wound material, in the unrolled or unwound state and divided into predeterminable lengths can fulfill the respective purposes.

14. A tradable merchandise item consisting of a plurality of fastening systems according to any one of the preceding claims, which, combined on a carrier strip (38), as small parts (40) that can be separated from one another, after they have been detached from the carrier strip (38), are provided for the application for detachable adhesion to the third component.

15. Use of a fastening system according to any one of the claims 1 to 13, **characterized in that** the fastening system is used to render the information content of traffic signs of any kind ineffective and/or is used as a warning to make vehicles, such as construction vehicles, recognizable, and for which, by detaching the fastening system from such third components, the ineffective-rendering or the making-recognizable is removed without leaving any residue.

## Revendications

1. Système de fixation pouvant être appliqué à plusieurs reprises sur des composants tiers présentant une surface préférentiellement lisse, en vue d'un blocage à demeure dissociable sur ces derniers, comprenant au moins deux parties fonctionnelles (2, 6) reliées l'une à l'autre et s'étendant à plat, parmi lesquelles au moins une partie fonctionnelle (2) est conçue en tant que film porteur d'informations, et au moins une partie fonctionnelle (6) additionnelle est munie d'une pluralité d'éléments individuels (4) qui demeurent attachés par adhérence à la surface du composant tiers considéré, par leurs faces extrêmes libres (8), lesquels éléments individuels (4) sont respectivement réalisés sous la forme de pièces (18) du type bâtonnet ou pédoncule présentant, au niveau de leurs extrémités libres (8), un accroissement diamétral revêtant la forme d'un élargissement (20).

2. Système de fixation selon la revendication 1, **caractérisé par le fait que**, pour assurer l'adhérence mutuelle des deux parties fonctionnelles (2, 6), un agent de liaison (22) se présentant notamment comme un adhésif est déversé entre ces dernières.

3. Système de fixation selon la revendication 1 ou 2, **caractérisé par le fait qu'**une troisième partie fonctionnelle (26) conçue en tant que partie de support (28), interposée entre les deux parties fonctionnelles (2, 6) en vue d'instaurer une structure en sandwich, comporte l'agent de liaison (22) au moins sur l'une de ses deux faces, de préférence sur les deux faces, par rapport à au moins l'une desdites parties fonctionnelles (2, 6) occupant des emplacements voisins.

4. Système de fixation selon l'une des revendications précédentes, **caractérisé par le fait que** toutes les parties fonctionnelles (2, 6, 26, 28), y compris d'éventuels agents de liaison (22), se présentent sous une forme stratifiée et sont mutuellement en applique avec plans parallèles et par toute la superficie, ainsi qu'avec absence de débordement, au moins dans un état initial précédant l'utilisation.

5. Système de fixation selon l'une des revendications précédentes, **caractérisé par le fait qu'**au moins quelques-unes des parties fonctionnelles (2, 6, 26, 28) proprement dites présentent une structure à plusieurs couches.

6. Système de fixation selon l'une des revendications précédentes, **caractérisé par le fait que** la partie fonctionnelle (6) additionnelle est scindée comme un tout, avec les éléments individuels (4), en des groupes (30) séparés les uns des autres, en particulier dans une direction longitudinale et/ou transversale vis-à-vis de l'étendue du film de l'une (2) des parties fonctionnelles, d'une distance (34) pouvant être préétablie et présentant, de préférence, une cote interstitielle inférieure à l'épaisseur du film de chacune des parties fonctionnelles (2, 6, 26, 28).

7. Système de fixation selon l'une des revendications précédentes, **caractérisé par le fait qu'**un élément (32) entrant dans la composition des groupes (30) est constitué d'un élément partiel (32) individuel formant la partie fonctionnelle (6) additionnelle avec d'autres éléments partiels (32).

8. Système de fixation selon l'une des revendications précédentes, **caractérisé par le fait que** les parties fonctionnelles (2, 6, 26, 28) disposées au voisinage les unes des autres sont reliées mutuellement sans adhésif, au moyen d'un procédé de laminage ou de contrecollage.

9. Système de fixation selon l'une des revendications précédentes, **caractérisé par le fait que** la partie fonctionnelle (2, 6, 26, 28) considérée est constituée d'une matière plastique telle que du polyéthylène ; et **par le fait que** la partie fonctionnelle (6) additionnelle est douée, au moins à proportion de ses éléments individuels (4), d'une propriété d'adhérence de la classe des poly(organo)siloxanes, préférentiellement en un polyvinylsiloxane.

10. Système de fixation selon l'une des revendications précédentes, **caractérisé par le fait que** l'une (2) des parties fonctionnelles, en tant que porteuse d'informations, est de réalisation
- colorée
- revêtue de symboles, préférentiellement d'un texte imprimé(s)
- réfléchissante
- fluorescente
- lumineuse
- mate ou brillante
- dotée d'intelligence artificielle

11. Système de fixation selon l'une des revendications précédentes, **caractérisé par le fait qu'**au moins l'une des parties fonctionnelles (2, 6, 26, 28) est investie de fonctions supplémentaires du type
- ignifuge
- recyclable
- biodégradable
- incinérable
- magnétisable ou présentant des propriétés magnétiques
- résistant à une charge électrostatique ou électromagnétiquement compatible (EMC)
- résistant à l'abrasion

12. Système de fixation selon l'une des revendications précédentes, **caractérisé par le fait que** la partie fonctionnelle additionnelle peut être produite, conjointement aux éléments individuels aptes à l'adhérence, avec utilisation d'un écran de formage par le procédé à rouleau refroidisseur.

13. Système de fixation selon l'une des revendications précédentes, **caractérisé par le fait que**, conçu en tant que matériau enroulé ou bobiné, il peut être affecté à l'objectif d'utilisation considéré à l'état respectivement déroulé ou dévidé, et scindé en des longueurs pouvant être préétablies.

14. Unité matérielle commercialisable constituée de plusieurs systèmes de fixation conformes à l'une des revendications précédentes, regroupés sur une bande de support (38) sous la forme de petites pièces (40) pouvant être séparées les unes des autres et prévus, à l'état détaché de ladite bande de support (38), pour être employés en vue d'une liaison libérable avec le composant tiers.

15. Utilisation d'un système de fixation conforme à l'une des revendications 1 à 13, **caractérisée par le fait que** ce dernier sert à la neutralisation de contenus informatifs de panneaux de circulation de tous types et/ou à l'avertissement ciblant l'identification de véhicules tels que des véhicules de chantiers ; et **par le fait que** ladite neutralisation ou identification est annulée, avec absence de reliquat, par dissociation dudit système de fixation d'avec de tels composants tiers.
